(19) Europäisches Patentamt

European Patent Office

Office européen des brevets

(11) **EP 1 515 257 A1**

(12) **EUROPEAN PATENT APPLICATION**

(43) Date of publication:
**16.03.2005 Bulletin 2005/11**

(51) Int Cl.⁷: **G06F 17/60**

(21) Application number: **04255410.5**

(22) Date of filing: **07.09.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **12.09.2003 US 661846**

(71) Applicant: **ABB RESEARCH LTD.
8050 Zürich (CH)**

(72) Inventors:
• **Pierre, James
  Marietta, Georgia 30062 (US)**
• **Yigit, Ahmet
  Raleigh, North Carolina 27606 (US)**

• **Emond, Glen
  South Boston, Virginia 24592 (US)**
• **Kanagarajan, Prabhakar
  Athens, Georgia 30605 (US)**
• **Susarla, Gayatri
  Watkinsville, Georgia 30677 (US)**
• **Kanani, Naishadh
  Athens, Georgia 30606 (US)**

(74) Representative: **W.P. THOMPSON & CO.
Eastcheap House
Central Approach
Letchworth Garden City,
Hertfordshire SG6 3DS (GB)**

(54) **Object-oriented system for monitoring from the work-station to the boardroom**

(57) Systems and methods for visually displaying real-time enterprise management information over all levels of a corporate organizational structure of an enterprise. An application integration platform receives plural types of data from manufacturing and information systems within the enterprise and analyzes the plural types of data to determine key performance indicators. A process control server receives manufacturing data from at least one work center and forwards the manufacturing data to the application integration platform. A database contains information related to manufacturing processes performed at the at least one work center. A graphical user interface that interfaces with the application integration platform to provide a visual display of the key performance indicators in accordance with the class of user interacting therewith. The levels of the corporate organizational structure are modeled as objects having methods and variables. In addition, the objects may be created using an organizational hierarchical structure of the enterprise to be monitored together with respective states and behaviors of components within each level of the corporate structure.

FIG. 2

**Description**

FIELD OF THE INVENTION

This invention relates in general to the field of information management. More particularly, the invention relates to a system and method of real-time monitoring and visualizing of manufacturing processes and other key business processes.

BACKGROUND OF THE INVENTION

Managing daily business activities efficiently is very important to keep operating costs low and customers satisified. In today's business world, it is very difficult and complicated to obtain real-time information necessary to manage business processes and monitor assets. Using incomplete or inaccurate data can lead to strategic and tactical mistakes, long lead times, high work in progress (WIP), and quality problems. These problems cost businesses time and money due to higher capital expenses, decreased cash flow through lower inventory turnover, higher saftey/buffer stocks, and decreased availability.

Conventional systems do not provide an efficient, flexible and reliable system to monitor the daily, and short and long term activities of an enterprise in real-time. Thus, in view of the foregoing, there is a need for systems and methods that overcome the limitations and drawbacks of the prior art. In particular, there is a need for system that can monitor the activities of an enterprise in real-time to address the limitations of the prior art and provide decision makers with the information they need. The present invention seeks to provide such a solution.

SUMMARY OF THE INVENTION

The present invention provides a system for visually displaying real-time enterprise management information, In accordance with an aspect of the invention, there is provided systems for visually displaying real-time enterprise status information over all levels of a corporate organizational structure of an enterprise. The systems include an application integration platform that receives plural types of data from manufacturing and information systems within the enterprise, the application integration platform analyzing the plural types of data to determine key performance indicators, a process control server that receives manufacturing data from at least one work center and forwards the manufacturing data to the application integration platform, a database containing information related to manufacturing processes performed at the at least one work center, and a graphical user interface that interfaces with the application integration platform to provide a visual display of the key performance indicators in accordance with the class of user interacting therewith. The levels of the corporate organizational structure are modeled as objects having methods and variables. In addition, the objects may be created using an organizational hierarchical structure of the enterprise to be monitored together with respective states and behaviors of components within each level of the corporate structure.

In accordance with a feature of the invention, the key performance indicators may include at least one of: throughput time, manufacturing hours, work center utilization, man-hour capacity, planned vs. actual hours for work orders, and work in process. The key performance indicators may be determined in accordance with at least one of a work order number, a work station identifier, a start time, an end time, an activity code, a problem code, employee information, a material code, a planned start time, and a planned completion time.

In accordance with another feature of the invention, objects modeling respective components of a first part of the corporate structure may be reusable to model components of a second part of the corporate structure.

In accordance with yet another feature, the classes of users may include managers, engineers, and operators. Once class of users may be provided financial and manufacturing key performance indicators, wherein a second class of users may be provided analysis capabilities, and a third class of users may be provided key performance indicators for a supervised area and scheduling information.

In accordance with another feature of the invention, there is provided a method of visually displaying real-time enterprise management information. The method may include obtaining manufacturing data from at least one work center having at least one manufacturing machine, wherein the at least one work center and the manufacturing machine are modeled as objects having methods and variables, the objects using an organizational hierarchy of the at least one work center and the manufacturing machine such that respective states and behaviors are monitored together; storing the manufacturing data in a database containing information related to manufacturing processes performed at the at least one work center; analyzing the manufacturing data to determine key performance indicators; and presenting differing ones of the key performance indicators to different classes of end users in accordance with user-selected input parameters.

Additional features and advantages of the invention will be made apparent from the following detailed description of illustrative embodiments that proceeds with reference to the accompanying drawings.

## EP 1 515 257 A1

## BRIEF DESCRIPTION OF THE DRAWINGS

The foregoing summary, as well as the following detailed description of preferred embodiments, is better understood when read in conjunction with the appended drawings. For the purpose of illustrating the invention, there is shown in the drawings exemplary constructions of the invention; however, the invention is not limited to the specific methods and instrumentalities disclosed. In the drawings:

Fig. 1 is a block diagram showing an exemplary computing environment in which aspects of the invention may be implemented;

Figs. 2-6 illustrate the architecture and components of the present invention;

Figs. 7, 8A, 8B and 9 illustrate the various levels of detail and information that may be provided to different classes end-users within an enterprise; and

Figs. 10-17 illustrate exemplary user interfaces and output reports provided by the present invention.

## DETAILED DESCRIPTION OF PREFERRED EMBODIMENTS

In today's business world, sustaining or gaining competitiveness requires adaptability. Typically, business process, and information systems are designed separately without any common integration. There are varieties of applications supported and used from workstation to the management board. This problem multiplies moving across fragmented business units to the boardroom because of the lack of a common information technology infrastructure.

As a result information is not centralized and shared to enable and support real-time decision-making. Under the current environment, it is difficult and inefficient to determine Key Performance Indicators (KPI), such as company financial indicators, market activities, overall company condition, throughput, available capacity, machine status, quality information, etc. from the Boardroom level down to the workstation level (i.e., all levels of a corporate structure) at and across individual business in real-time. Thus, it is difficult to measure productivity gain/loss from production/process changes. Such operating conditions prohibit benchmarking and reuse of knowledge/experiences because of the inefficiencies associated with data collection. As a result operating costs are high especially when the portfolio of business is broad.

The present invention is directed to systems and methods for monitoring whole enterprise processes and key performance indicators (KPI) both locally and remotely. Classes of users (e.g., managers, engineers, operators, etc.) are able to monitor KPIs, such as financial indicators, market activities, overall company conditions, throughput, available capacity, machine status, quality information, etc. Decisions can be made on day-to-day activities, and short and long term activities based on the monitored results. The present invention includes software that is based on an object-oriented architecture to provide a platform that can be easily configured and scaled to increase functionality and enterprise growth.

The methodology described herein is a robust and easy way to assess a scheduling status of jobs in the shop floor in real time and change the job scheduling if necessary.

### Exemplary Computing Environment

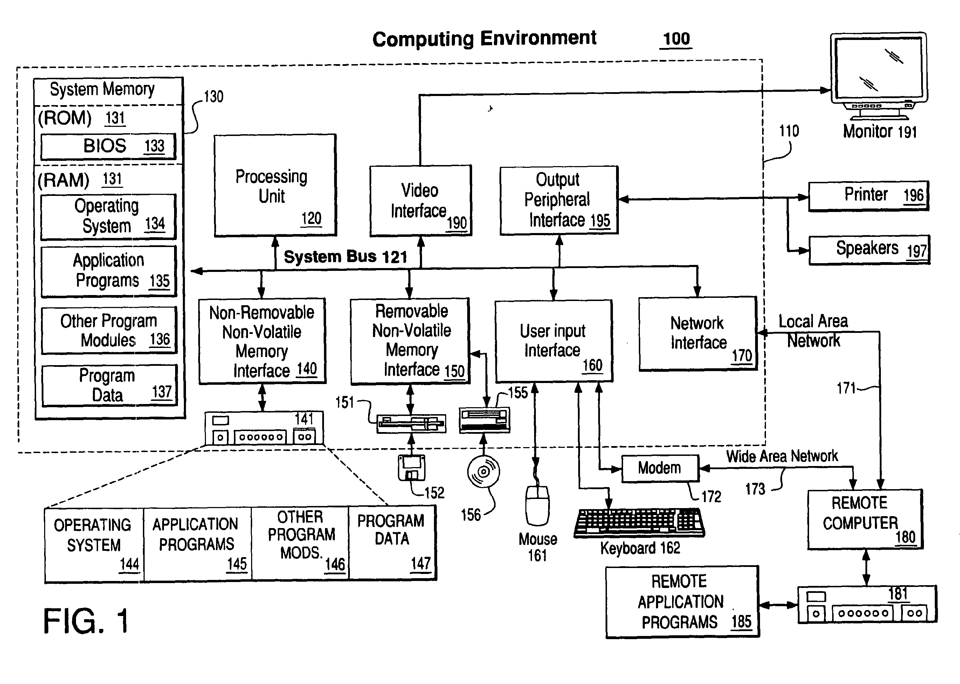

Fig. 1 illustrates an example of a suitable computing system environment 100 in which the invention may be implemented. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100.

The invention is operational with numerous other general purpose or special purpose computing system environments or configurations. Examples of well known computing systems, environments, and/or configurations that may be suitable for use with the invention include, but are not limited to, personal computers, server computers, handheld or laptop devices, multiprocessor systems, microprocessor-based systems, set top boxes, programmable consumer electronics, network PCs, minicomputers, mainframe computers, distributed computing environments that include any of the above systems or devices, and the like.

The invention may be described in the general context of computer-executable instructions, such as program modules, being executed by a computer. Generally, program modules include routines, programs, objects, components, data structures, etc. that perform particular tasks or implement particular abstract data types. The invention may also be practiced in distributed computing environments where tasks are performed by remote processing devices that are linked through a communications network or other data transmission medium. In a distributed computing environment, program modules and other data may be located in both local and remote computer storage media including memory storage devices.

With reference to Fig. 1, an exemplary system for implementing the invention includes a general purpose computing device in the form of a computer 110. Components of computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus (also known as Mezzanine bus).

Computer 110 typically includes a variety of computer readable media. Computer readable media can be any available media that can be accessed by computer 110 and includes both volatile and non-volatile media, removable and non-removable media. By way of example, and not limitation, computer readable media may comprise computer storage media and communication media. Computer storage media includes both volatile and non-volatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can accessed by computer 110. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer readable media.

The system memory 130 includes computer storage media in the form of volatile and/or non-volatile memory such as ROM 131 and RAM 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, Fig. 1 illustrates operating system 134, application programs 135, other program modules 136, and program data 137.

The computer 110 may also include other removable/non-removable, volatile/non-volatile computer storage media. By way of example only, Fig. 1 illustrates a hard disk drive 140 that reads from or writes to non-removable, non-volatile magnetic media, a magnetic disk drive 151 that reads from or writes to a removable, non-volatile magnetic disk 152, and an optical disk drive 155 that reads from or writes to a removable, non-volatile optical disk 156, such as a CD-ROM or other optical media. Other removable/non-removable, volatile/non-volatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media, discussed above and illustrated in Fig. 1, provide storage of computer readable instructions, data structures, program modules and other data for the computer 110. In Fig. 1, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies. A user may enter commands and information into the computer 20 through input devices such as a keyboard 162 and pointing device 161, commonly referred to as a mouse, trackball or touch pad. Other input devices (not shown) may include a microphone, joystick, game pad, satellite dish, scanner, or the like. These and other input devices are often connected to the processing unit 120 through a user input interface 160 that is coupled to the system bus, but may be connected by other interface and bus structures, such as a parallel port, game port or a universal serial bus (USB). A monitor 191 or other type of display device is also connected to the system bus 121 via an interface, such as a video interface 190. In addition to the monitor, computers may also include other peripheral output devices such as speakers 197 and printer 196, which may be connected through an output peripheral interface 190.

The computer 110 may operate in a networked environment using logical connections to one or more remote computers, such as a remote computer 180. The remote computer 180 may be a personal computer, a server, a router, a network PC, a peer device or other common network node, and typically includes many or all of the elements described above relative to the computer 110, although only a memory storage device 181 has been illustrated in Fig. 1. The logical connections depicted include a local area network (LAN) 171 and a wide area network (WAN) 173, but may also include other networks. Such networking environments are commonplace in offices, enterprise-wide computer networks, intranets and the Internet.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user input interface 160, or other appropriate mechanism. In a networked environment, program modules depicted relative to the computer 110, or portions thereof, may be stored in the remote memory storage device. By way of example, and not limitation, Fig. 1 illustrates remote application programs 185 as residing on memory device 181. It will be appreciated that the network connections shown are exemplary and other means of establishing a communications link between the computers may be used.

**Exemplary Distributed Computing Framework and Architecture**

The present invention is directed to systems and methods for monitoring whole enterprise processes and key performance indicators (KPI) that provides for decoupling of functionality into individual, standalone, reusable subsystems. The present invention provides small, simple interfaces between components, and similarity of concepts within the architecture. The decomposition of the system into reusable components is performed in such a way, that the system can be adapted to changes in requirements via an exchange of a minimal set of components. To accomplish these goals, the present invention is preferably implemented using VB coding standards.

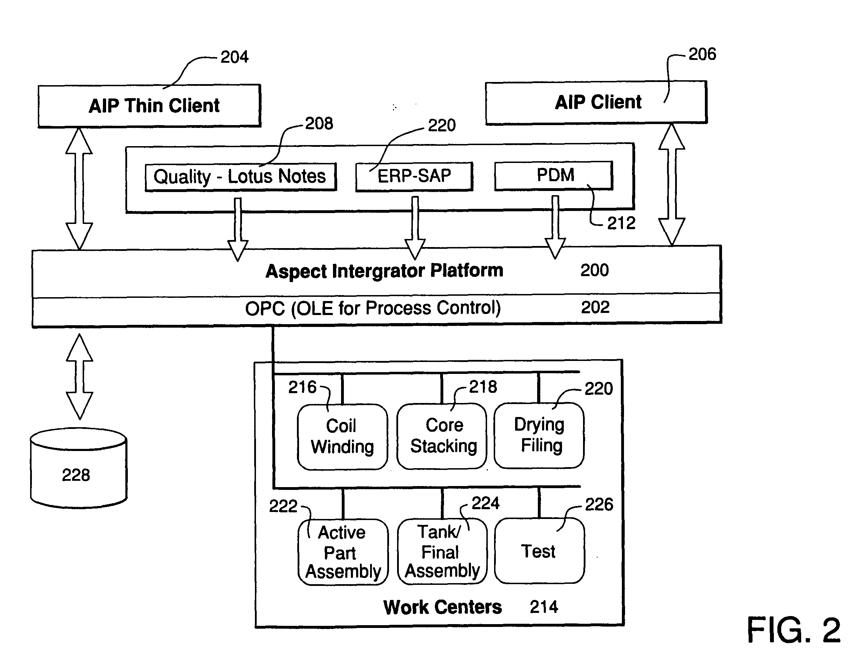

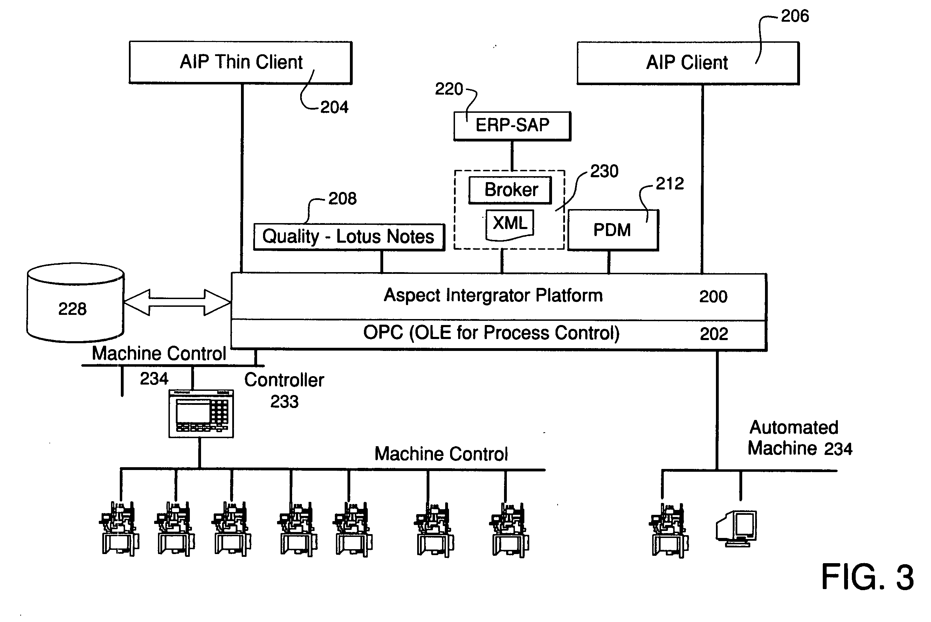

Referring to Figs. 2-6, the present invention integrates the disparate manufacturing and information systems into an Application Integrator Platform (AIP) platform 200. The AIP platform 200 may be implemented on a computer similar to computer 110 and receive data from several systems and to provide visual monitoring. The AIP is platform independent, and may be implemented using VB coding standards, JAVA, or within a .Net Environment. If the platform 200 needs financial information, the data may be extracted from an Enterprise Resource Planning (ERP) system 220 via an exchange of XML data 230 in real-time (see, Fig. 3). The common visualization program enables the sharing of business content and data across the enterprise by supporting integration to Enterprise Resource Planning (ERP) system 220 via an exchange of XML data 230 in real-time (see, Fig. 3) for financial information or to other enterprise applications such as Quality, Manufacturing, Execution System (MES) 208, Product Data Management (PDM) 212, etc. The ERP system 220 preferably comprises R/3 release 4.6C, available from SAP AG. The MES 208 and PDM 212 may comprise Lotus Notes, available from IBM Corporation.

Users interact with the system by logging on to the AIP 200 locally, or remotely using a WWW interface via the Internet. Preferably, two interfaces are implemented, an AIP Thin Client 204 for the BA view, and an AIP Client 206 for the BAU view. The BAU shows a Business Area Unit (e.g., a manufacturing facility or business), whereas the BA view shows a Business Area (a group of common BAUs). The AIP Thin Client 204 and AIP Client 206 may be implemented on, e.g., computer 110 to connect to various components via a LAN 236 and/or corporate intranet 240. In addition, other components may communicate with each other via the LAN 236 or wireless access points 238 and bridges 239. Business activity can be graphically monitored by the system in real-time to allow users to react and make critical business decisions based on performance information.

Manufacturing status data 214 may be gathered via a barcoding system or machine sensors and/or other controls from, e.g., a coil winding machine 216, core stacking machine 218, drying/filling machine 220, active part assembly machine 222, tank/final assembly machine 224 and/or test machine 226. It is noted that the present invention is not limited to such machines and/or data, and may be utilized to capture and analyze data from other types of machines and information sources. Barcode data gathering techniques are well know to those of ordinary skill in the art and equipment therefor is available from, e.g., Symbol Technologies, Holtsville, NY.

Figs. 3-5 illustrate architecture of Fig. 2 with particular reference to the Coil Winding machine 216. The winding machine 216 may be monitored via well known sensors to track machine status (e.g., on/off) and state (e.g., turning). Data related with manufacturing may be gathered from feedback points in the plants using sensors and the barcode system (including database 228). Data signals will be sent directly to an OLE from Process Control (OPC) server 202.

Those of ordinary skill in the art will understand that OPC is a series of standards specifications. The first standard (called the OPC Specification and now called the Data Access Specification) resulted from the collaboration of a number of leading worldwide automation suppliers working in cooperation with Microsoft Corp. Originally based on Microsoft's OLE COM (component object model) and DCOM (distributed component object model) technologies, the specification defined a standard set of objects, interfaces and methods for use in process control and manufacturing automation applications to facilitate interoperability. The COM/DCOM technologies provided the framework for software products to be developed. There are now hundreds of OPC Data Access servers and clients.

When sensor signals are sent to the OPC Server 202, the Aspect Integrator Platform (AIP) 200 or Web Interface will be used to gather the data and display the information to the end users. This data will include operator activities from the data feedback points in the manufacturing plant. Manual machines 232 may have optical and voltage sensors to measure status of the manufacturing, which are sent to a controller 233 for transmission to the OPC Server (OLE for Process Control) 202. For highly automated machines 234, which have the built in controller, the signals are sent directly to the OPC server 202. The AIP 200 may extend across a single or multiple disparate locations to extent the value chain and enable real-time correlation.

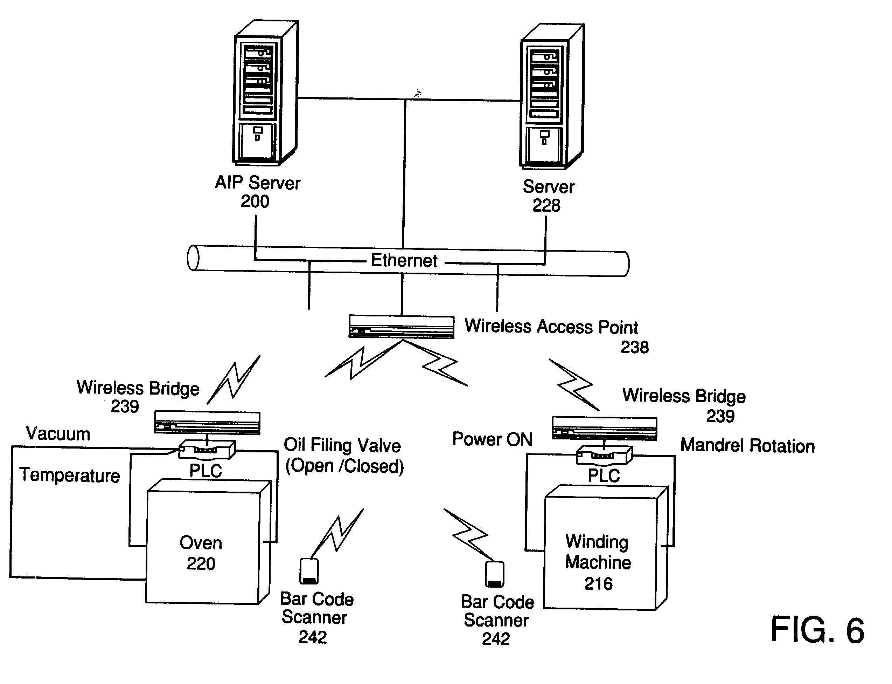

As shown in Fig. 6, there is illustrated a generic wireless bridge framework that may be used to gather data from the workstation to the boardroom as illustrated. This supports modularity as it can easily be adapted to automation/control applications, field systems/devices, and business/office applications at any workstation. The test oven 220 and winding machine 216 are two exemplary machines monitored by the present invention. The oven may be monitored via well known sensors to track temperature, vacuum, etc. and the data therefrom communicated via the wireless access point 238 and the wireless bridges 239 to the AIP platform 200. Barcoding techniques may also be used to track activities via SAP data and ERP System 220. As is now evident to those of ordinary skill in the art, any performance characteristic of any machine on the shop floor may be monitored by the present invention by collecting data therefrom.

In accordance with the present invention, the AIP platform 200 is encapsulated in object-oriented architecture for modularity and adaptability. These two features advantageously provide for a competitive edge in today's global economy. The concept used for the AIP platform 200 entails using a unified framework for modeling objects from the workstation to the boardroom in order to monitor, report, and collect the required KPI.

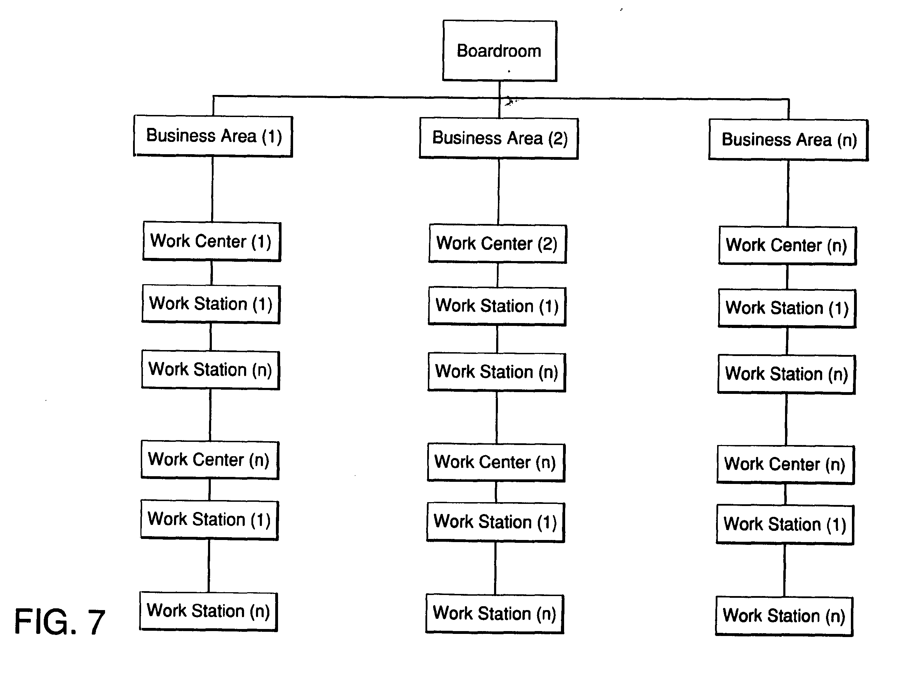

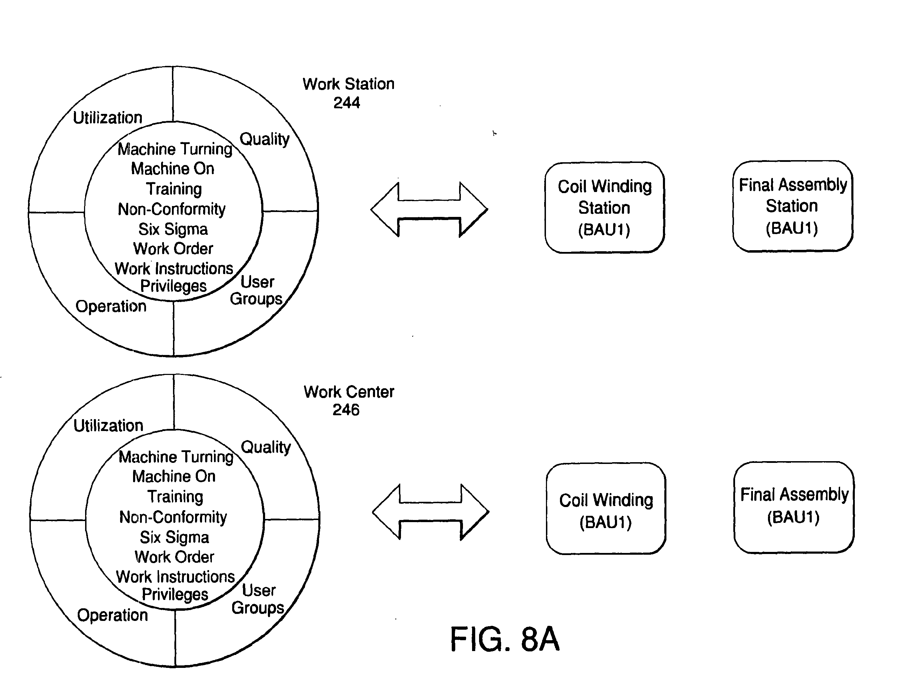

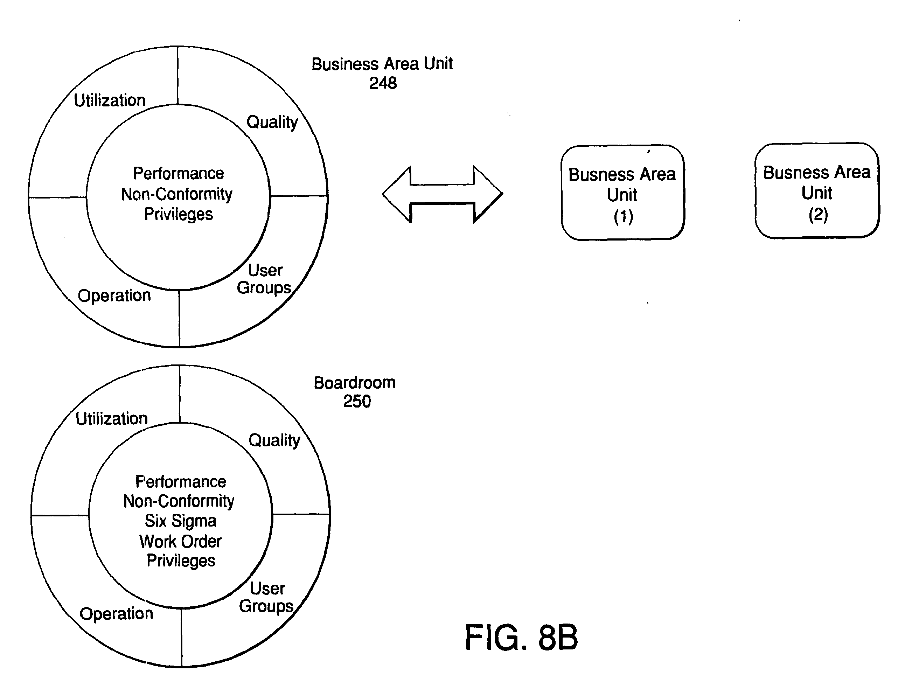

Under the concept that objects are modeled after real world objects with state and behavior, the corporate organization illustrated in Fig. 7 is modeled as an object with methods and variables. As illustrated in Figs. 8A and 8B, the objects 244, 246, 248 and 250 are created using the current organizational hierarchical structure for workstation, work center, organization, etc. with their respective states and behaviors. Under this framework the objects 244, 246, 248 and 250 are capable of being modeled with basic requirement needed to enable the platform 200. However the individual objects can be easily customized for other KPIs. This adaptability allows the platform 200 to meet the basic requirements needed to monitor KPIs at a macro scale while at the same time providing the KPIs needed to manage a business at a micro scale.

Supporting this object modeling adaptability are standard integration protocols, such as OLE for Process Control (OPC) and Open Database Connectivity (ODBC) for structured business data and standard API or XML for unstructured business content, such as ERP and Lotus Notes.

The class hierarchies of the object created for the workstation to the boardroom are preferably identical in behavior, which supports the modularity of the AIP platform 200 as it is deployed. As an example, the workstation objects 244 can be reused throughout the particular organization for other workstations or other business organization when the AIP platform 200 is redeployed. The only change required is the mapping of the different data requirements needed to support their respective variables. The class concept holds true for the other objects modeled for the system.

In accordance with the present invention, the following exemplary key performance indicators (KPI) may be monitored by the API 200 of the present invention:

1. Throughput time (days)

Throughput time may be calculated for overall manufacturing and for each process as days spent in production for a project name, unit, and work order:

$$\text{Throughput time} = \text{Completion time} - \text{start time (for work order, project name, and}$$

$$\text{unit).}$$

In accordance with the present invention, users may calculate a throughput time for given dates, project name, work order, and unit. For example, if a user wants to see all project throughput times for last 30 days, the user will be able to view a project name and its associated throughput times. If he/she wants to see a particular project or unit throughput time, he/she should be able to see the project name or unit throughput time as a whole or for individual work centers.

2. Manufacturing hours (total and by activity)

Manufacturing time may be calculated for each activity in the shop floor as hours spent on a project, work order, and unit. This KPI is similar to throughput time, except that real manufacturing hours is preferably tracked on the shop floor. Manufacturing activities may be defined as, e.g., set up, processing, and set out. Similarly, manufacturing problems may be defined as, e.g., break down, missing parts, quality issues, operator breaks, and technical clarification.

In accordance with the present invention:

$$\text{Manufacturing time (overall)} = \text{end time (or current time)} - \text{start time} - \text{all problem}$$

$$\text{times (e.g., employee break, technical problems, etc.)}$$

Manufacturing time (for an activity) = end time (or current time) for an activity - start time for the activity - all problem times (e.g., employee break, technical problems, etc.). The present invention gathers information for given work center (e.g., activities and problem time), project name, and unit. Similarly, same time calculation should be performed for manufacturing problems. It is preferable that the user is able to obtain problem codes and times for break down, missing parts, quality issues, operator breaks, and technical clarification. For example, the user should be able to obtain break down times for all projects for a particular work center or all work centers for a given date interval.

3. Work Center Utilization

In accordance with the present invention, work center utilization is a measure of the actual productive time for a work center:

$$\text{Utilization for a machine} = (\text{productive time on the machine}) / (\text{endtime} - \text{start}$$

$$\text{time}).$$

Machine productive hours are preferably extracted through sensor data. Other required times may come from a database storing such information. It is preferable to obtain labor hours associated with particular work center through an employee ID to calculate total hours spent on the machine. The present invention may obtain these data for a given date and work center. If a user wants to view average work center utilization (i.e., not a particular machine utilization), the present invention preferably calculates average utilization after obtaining machine utilization.

4. Man-hour capacity report

Man-hour utilization is similar to the machine utilization. The present invention calculates total labor hours for each work center as follows:

$$\text{Man hour utilization} = (\text{used man hour}) / (\text{total available man hour})$$

Used man-hour will is preferably calculated in a similar manner as in the work center utilization (KPI 3) above. Total man-hours may be a manual entry and may be determined for user-specified dates.

5. Planned vs. Actual

As part of the project tracking purposes, it is preferable to calculate the following measures with scheduling: the difference between planned start time and actual start time, the difference between planned completion and actual completion time, and the difference between planned hours and actual hours.

Planned start and completion times for a work order are defined as the original scheduling times. Actual start time and completion time may be extracted from, e.g., a database 228. The present invention provides the user with a view of planned vs. actual time for each work station for a given project name. Users may also want to track planned vs. actual for each project for a given work center. For example, if he or she wants to see all the projects status for a winding center, he or she should be able to list all projects with planned vs. actual time in the work center.

6. Work in Process (WIP)

WIP is the number of units in each work center either waiting or processing for a given time. It is often necessary to find out how many units are waiting or processing in the work stations. In exemplary manufacturing environment 214 of the present invention, these are: a number of units in the winding process, a number of cores waiting (i.e., arrived, but not processed, thus are considered raw material), a number of active parts waiting (i.e., finished, but into the next process), a number of complete units waiting for final assembly (i.e., finished, but into the next process), a number of complete units waiting for final testing, a material weight for drums in the winding, and a number of tanks in the system.

The present invention provides WIP quantity by project name, unit, and work order for each station. For example, if user wants to see WIP quantity in the winding machine, all projects, units, and work orders assigned to winding work center are returned.

Additional KPIs may be defined in accordance with the particular needs of the enterprise manufacturing environment.

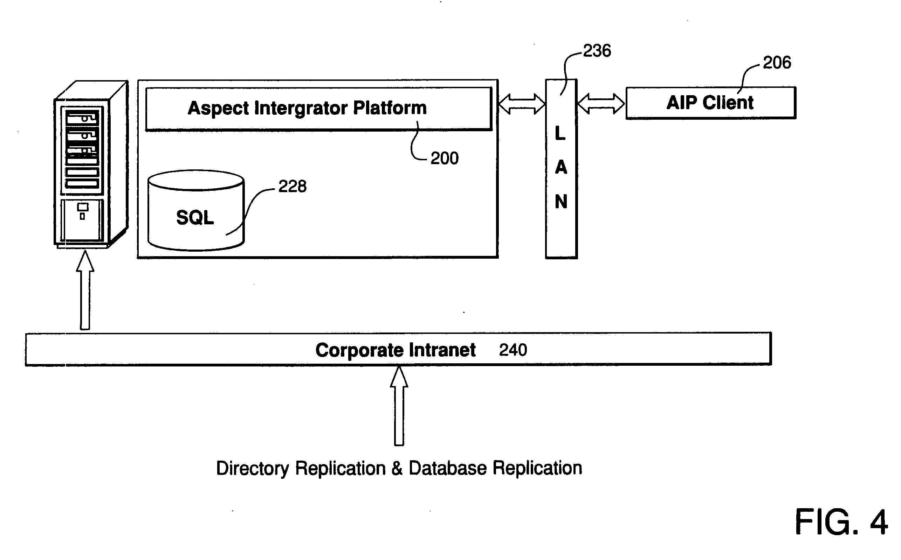

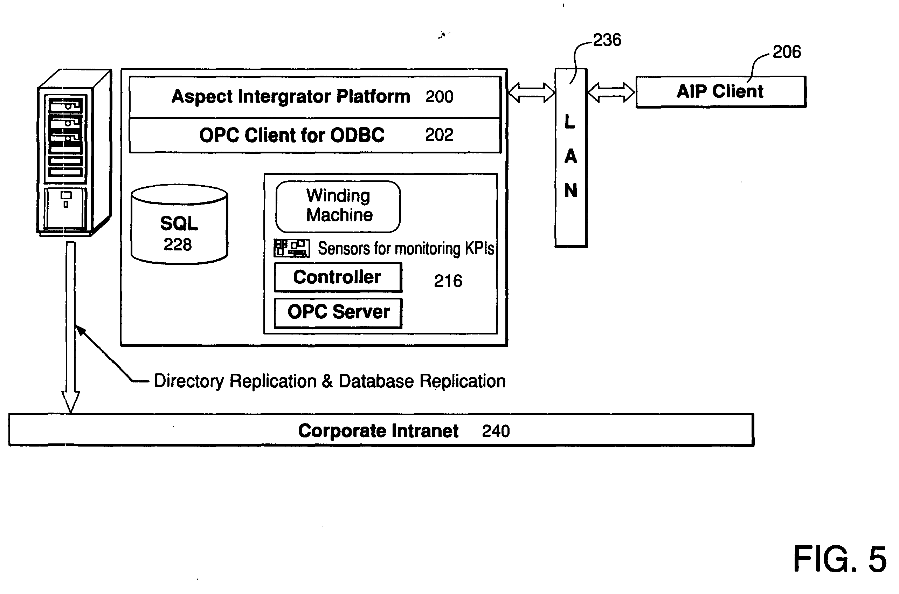

The database 228 of the present invention will now be described. Data storage and replication in database 228 is preferably implemented using SQL Server 2000, available from Microsoft Corp., Redmond, WA. In the present invention, directory replication and database replication is used for performance optimization. Data is preferably stored and managed locally. The BAU level the relevant KPI are summarized and replicated daily (see, Fig. 5). From the BAU data, the records and aspects are replicated to the BA server (see, Fig. 4) for viewing. The database replication is a functionality of SQL.

Processing at each workstation is maintained by scanning barcodes (using barcode scanner 242) representative of a particular status at the workstation. The data is stored in the database 228 for processing of the KPIs discussed above. Table One, below, relates the KPI monitoring data requirements to determine the KPI value.

Table One

| Monitoring Requirements | Data needed |
|---|---|
| KPI: Throughput time (days)<br>    Overall manufacturing throughput<br>    Throughput for each processes<br>    Throughput = (end time-start time) | Work Order (WO) number &<br>related operations numbers<br>Work Station ID<br>Start time for WO (at each station)<br>End time for WO (at each station) |
| KPI: Throughput activity analysis:<br>    Set up<br>    Processing<br>    Set out<br>    Break down<br>    Missing parts<br>    Quality issues<br>    Operator breaks, etc. | WO number (at each station)<br>Activity code and/or problem code<br>Start time for WO (at each station)<br>End time for WO (at each station) |
| KPI: Utilization:<br>    Machine used "on/off/break down"<br>    Machine turning "yes/no"<br>    Capacity Utilization = (Man-hour)/ (theoretical labor capacity) | Work station ID<br>Activity code<br>WO number<br>Employee Information (e.g., badge number) |
| KPI: Planned vs. Actual:<br>    Difference between planned start<br>time and actual start time.<br>    Difference between planned<br>completion and actual completion time.<br>    Difference between planned hours and actual hours. | WO number (at each work station)<br>Planned start time<br>Actual start time<br>Planned completion time<br>Actual completion Time |
| KPI: WIP for the each activity:<br>    Units in the winding process.<br>    Number of cores waiting.<br>    Number of active part waiting.<br>    Number of complete unit waiting for<br>final assembly.<br>    Number of complete unit waiting for | WO number (at each work center)<br>Work station ID<br>Start time for WO<br>End time for WO<br>Material code |

Table One   (continued)

| Monitoring Requirements | Data needed |
|---|---|
| final testing.<br>        Number of drums.<br>        Number of tanks in the system. | |
| KPI: Non conformity reports<br>        Number of "launched" weekly<br>        Different status ("launched", "on treatment", all excepted "solved")<br>        Cumulated number of manufacturing hours lost | Work Center<br>SAP mapping (to get the product code)<br>Material code<br>WO number |
| Test reports for the final testing for each unit. | Test Reports<br>Work station ID |
| Order Tracking:<br>        Which unit/project at which station. | WO number (at each station)<br>Work Station ID |

As noted above, in accordance with the present invention, data is captured using a barcode system 242 to determine and display the KPIs noted above. The structure of data items, such as databases, OPC servers, and configuration data will now be described. Table Two below defines an exemplary barcode system and type of the data collected or updated during the manufacturing operations. The scope of the claims of the present invention shall not be limited by the exemplary system described below, as other events and processes may be captured by the system of the present invention.

A data collection event, as used herein, is the manufacturing activity that will occur in a particular machine or work center. During these events, data related to the shop floor is collected and updated. For example, when operator starts to work, he or she scans or enters his or her badge number, WO number, and activity code. This activates the work process in the particular workstation and the data will be sent to the database 228 until the next event, which may be, e.g., an "end work," "pause," etc. event. In accordance with the present invention, the AIP 200 may access the database 228 to obtain the information in Table Two for presentation to a user.

Table Two

| | Start Work | End Work | Pause for Regular Breaks | Stop Work for a Problem | Quantity Report |
|---|---|---|---|---|---|
| Procedure | 1. Scan badge and WO<br><br>2. Enter activity code and press enter | 1. Scan badge and press enter | 1. Scan badge and WO<br><br>2. Enter problem code | 1. Scan badge and WO<br><br>2. Enter problem code<br><br>3. Press enter | 1. Scan badge and WO<br><br>2. Enter the quantity of completed<br><br>3. Enter scrap quantity |

Table Two   (continued)

|  | Start Work | End Work | Pause for Regular Breaks | Stop Work for a Problem | Quantity Report |
|---|---|---|---|---|---|
| Data Needs to be captured through barcode system | 1. Badge Number | 1. Badge Number | 1. Badge Number | 1. Badge Number | 1. Badge Number |
|  | 2. WO number | 2. WO number | 2. WO number | 2. WO number | 2. WO number |
|  | 3. Product ID | 3. Product ID | 3. Product ID | 3. Product ID | 3. Product ID |
|  | 4. Operation ID | 4. Operation ID | 4. Operation ID | 4. Operation ID | 4. Operation ID |
|  | 5. Start time for WO | 5. End time for WO | 5. End time for WO | 5. End time for WO | 5. End time for WO |
|  | 6. Status of WO |  |  | 6. Problem code | 6. Quantity completed |
|  | 7. Material code |  |  |  | 7. Scrap quantity |
|  | 8. Material quantity |  |  |  | 8. Status of WO |
|  | 9. Activity Code |  |  |  |  |
|  | 10. Work station ID |  |  |  |  |
|  | 11. Work Center ID |  |  |  |  |
| Other data related to the event | 1. Project ID |  |  | 1. Problem descriptions | 1. Project ID |
|  | 2. Planned start time |  |  |  | 2. Planned completion time |
|  | 3. Actual start time |  |  |  | 3. Actual completion time |
|  | 4. Customer order number |  |  |  | 4. Customer order number |
|  | 5. Activity descriptions |  |  |  |  |

In Table Two above, the following definitions apply:

WO number: This is a number that uniquely identifies a work order that was released to shop floor to the particular workstations/work centers.
Product ID: Identifies a unique product number that was assigned by BAU.
Operation ID: Defines the detailed work instructions for a particular work order.
These may be assembly instructions and/or component list.
Work Center ID: Work centers are group of machines that was identified by plant.
They are usually logically grouped machines such as winding machines or assembly stations. The work center ID is the number that uniquely identifies the group. Typically, work centers are same as in ERP systems work centers.
Work Station ID: The ID of a particular machine in a work center.
Start time for WO: This indicates that work for a particular job, by a particular operator has been initiated. When the operator starts or resumes the work order, this data is updated in the database. As operator begins working in the workstation, he/she scans his/her employee ID barcode and then a barcode on the WO paper, and then finally enters an "activity code."
End time for WO: When the operator finishes the work for that job, he/she scans the same barcodes noted above, and enters the activity code to end the job. When the operator ends the work for a work order, the end time is captured. It is preferable to capture and update this data in the database each time the operator stops or ends the work order.

Status of the work order: This data is used to trace the status of the work order. It preferably contains three statuses: "completed," "not started," and "started." When the WO is in the system (e.g., the database 228), it is assigned the status of "not started." When the operator starts to work on the work order, the status is updated to "started." Finally, when the work is completed, the status is updated to "completed."

Activity code: These define predetermined activities such as set up, processing, set out, etc. These codes are used to extract productive time in the shop floor.

Activity descriptions: These are the descriptions of the activity codes.

Problem codes: These are the codes that define predetermined problems such as material missing, machine breakdown, etc. These will be used to extract non-productive time in the shop floor to help point out improvement areas to the users.

Problem descriptions: These are the codes that define predetermined problems, such as material missing, machine breakdown, etc. These will be used to extract non-productive time in the shop floor. It will help the user to determine improvement areas.

Badge number: uniquely identifies an employee number.

Planned start time: This is the start time that was scheduled by the plant.

Actual start time: This is the actual start time for a particular work order. It is often different than the planned start time.

Planned completion time: This is the end time that was scheduled by the plant.

Actual completion time: This is the actual end time for a particular work order. It is often different than the planned end time.

Material code: the material code uniquely identifies a particular material or sub assembly in the work center. It may be, e.g., a number of coil drums or tanks that will be used in the stations.

Material quantity: It will be amount of material in particular workstations. Since these data will help to determine the WIP between the stations, it is preferably captured when material enter or leave the work stations

Customer Order Number: A unique customer order number assigned by plant. This number is preferably tied to a work order and product ID.

Project number: These define that a unique project belongs to a particular customer.

Quantity completed: When operator finishes a work order, he or she reports the quantity completed. This field shows the completed quantity of the WO.

Scrap quantity: These are the quantity reported to the system by operators.

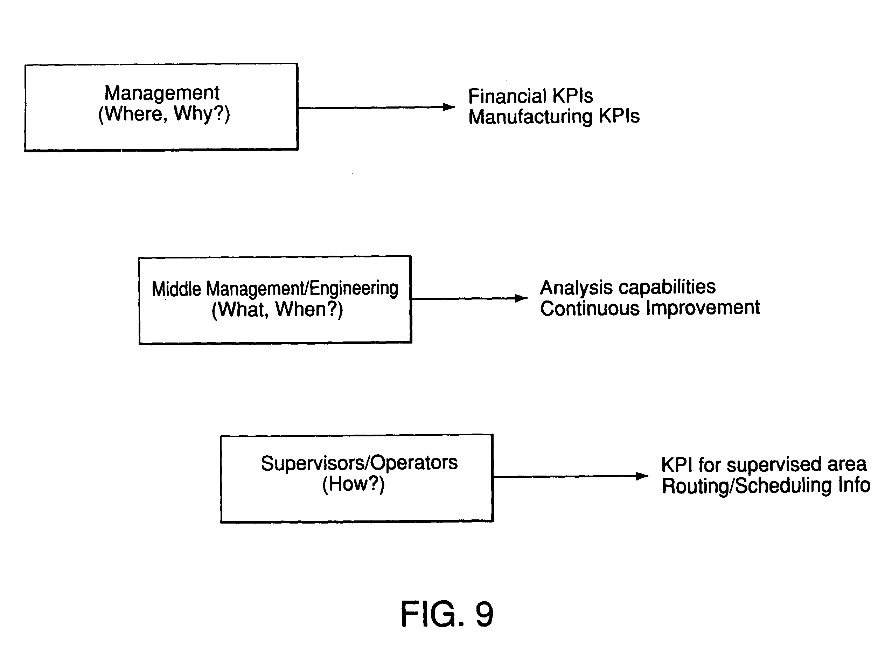

Using an object-oriented system also provides the capabilities to support application privileges to manage the user interface effectively, for sharing and distributing the information across the enterprise as illustrated Fig. 9. There is illustrated the various levels of information that the present invention may present to different levels of users. This is possible because of the interface that objects use to communicate with other objects and the independencies of the state and behaviors between objects. For example, top management may be provided financial and other critical KPI information, whereas middle management may be provided analysis capabilities for on-going activities. Further downstream, supervisors and operators may be provided with KPI information for their immediate areas and routing/scheduling information for a selected period of time. Thus, the present invention can provide all levels of employees with information specifically tailored for their needs. This advantageously reduces extraneous information and increases the relevance of the data provided to the user such that critical decisions can be made in a timely fashion. Table Three, below, further illustrates the various levels of detail that may be provided.

| User | Key Performance Measures (KPIs) | Subject Matter Experience | Technology Experience | Other Attributes |
|---|---|---|---|---|
| BA Manager | Throughput time Throughput activity analysis Machine Utilization (on/off, turning/not turning, and capacity utilization for windings, oil, and filling) | Knowledgeable of business | Novice | Read English |

(continued)

| User | Key Performance Measures (KPIs) | Subject Matter Experience | Technology Experience | Other Attributes |
|------|--------------------------------|---------------------------|----------------------|------------------|
| BAU Manager | Throughput time Machine Utilization (on/off, turning/not turning, and capacity utilization for windings, oil and filling) Throughput activity analysis WIP levels throughout the plant for key components Non conformity reports Manufacturing work order status | Knowledgeable of business and manufacturing process | Novice | Read English |
| Engineers/ Supervisors | Throughput time Machine Utilization (on/off, turning/not turning, and capacity utilization for windings, oil, and filling) Throughput activity analysis WIP levels throughout the plant for key components Non conformity reports Manufacturing work order status | Knowledgeable of business and manufacturing process | Novice | Read English |
| Operators | Throughput time Throughput activity analysis | Knowledgeable of manufacturing process | Novice | Read English |

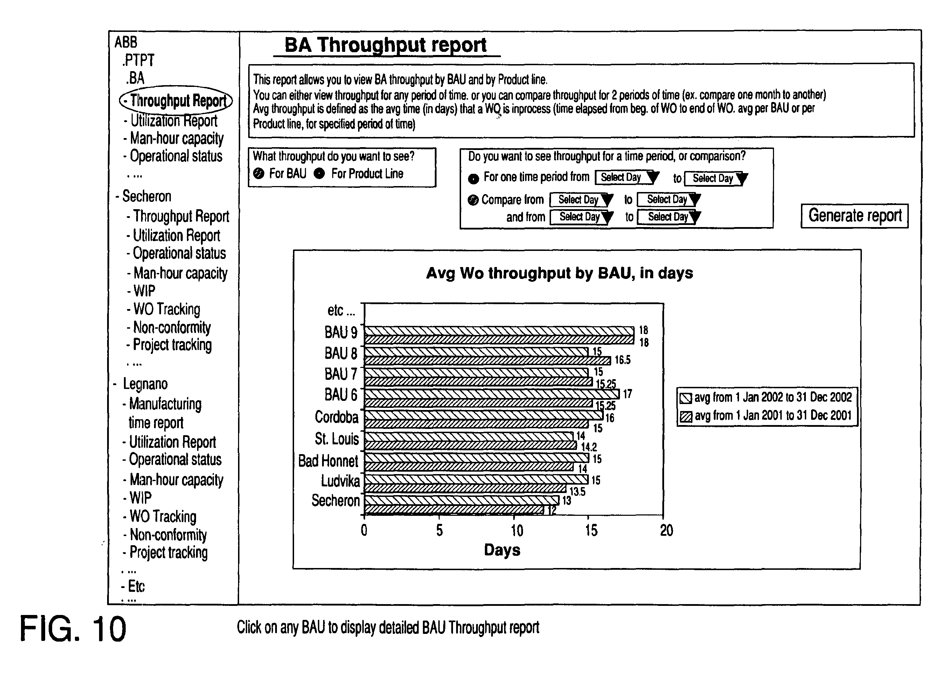

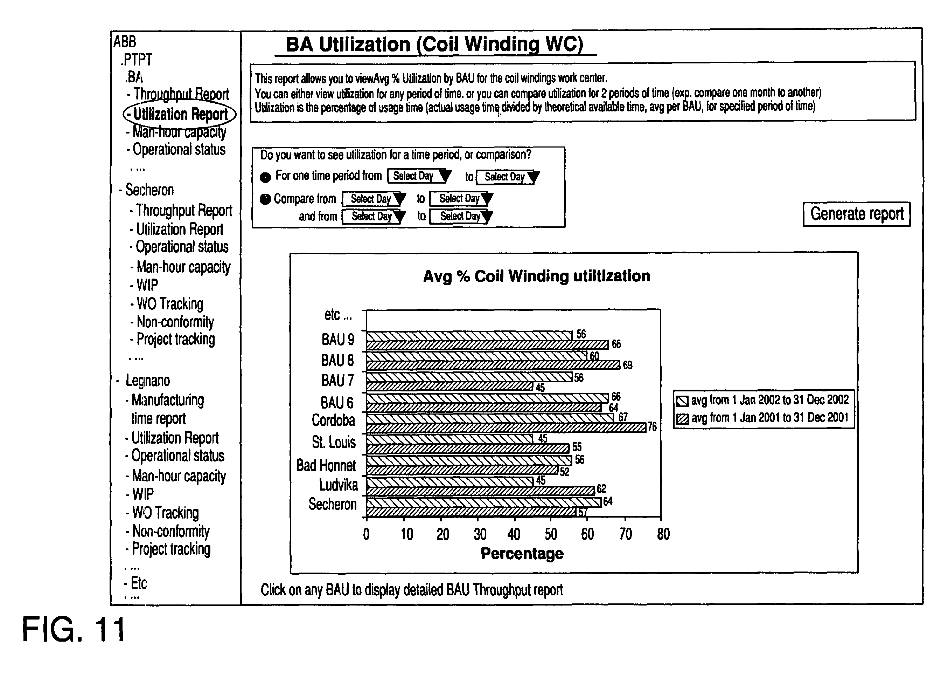

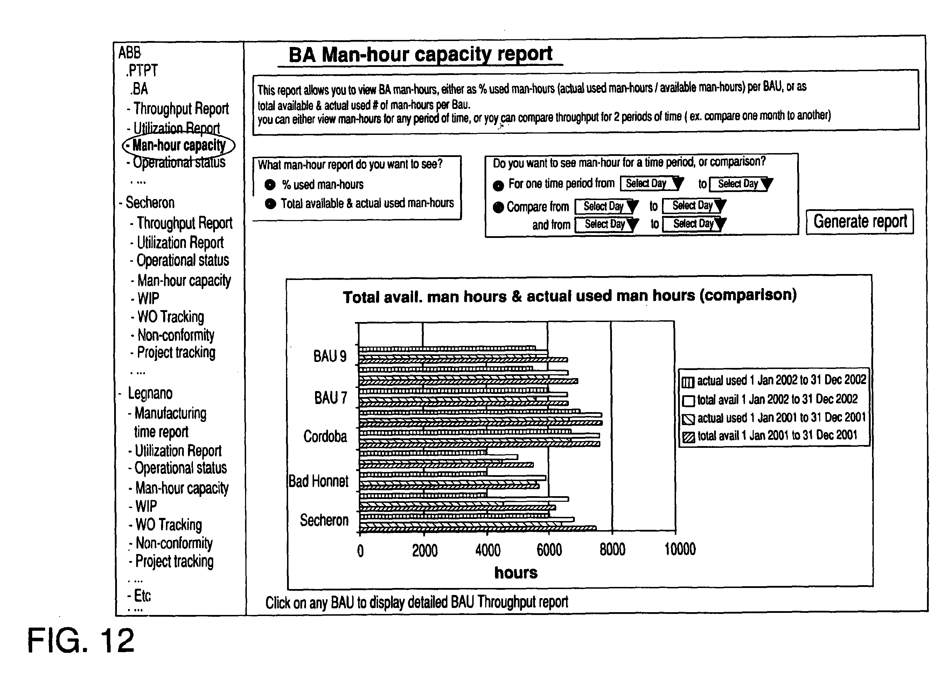

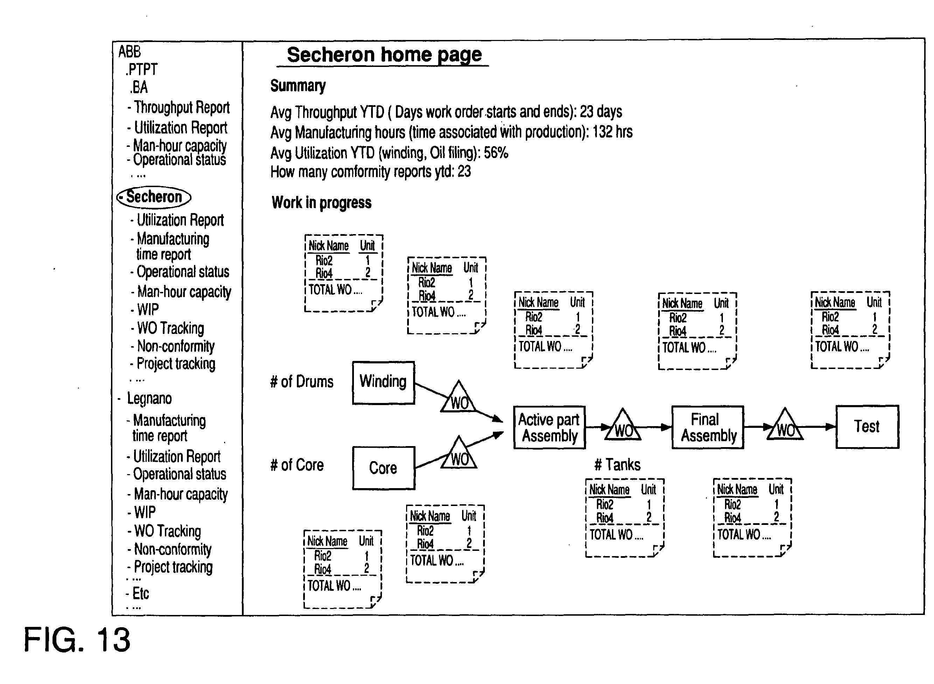

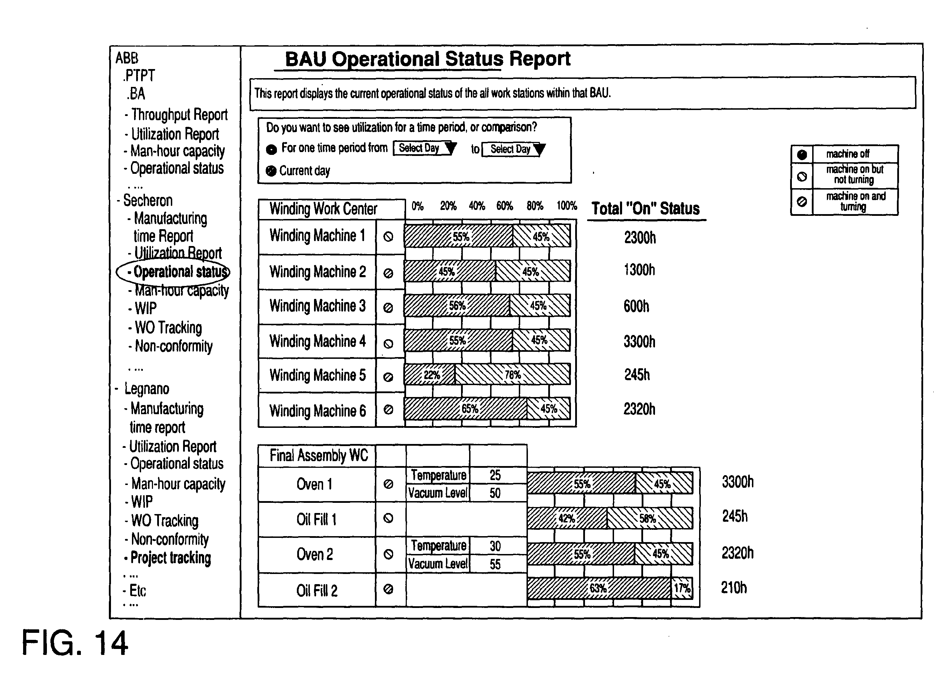

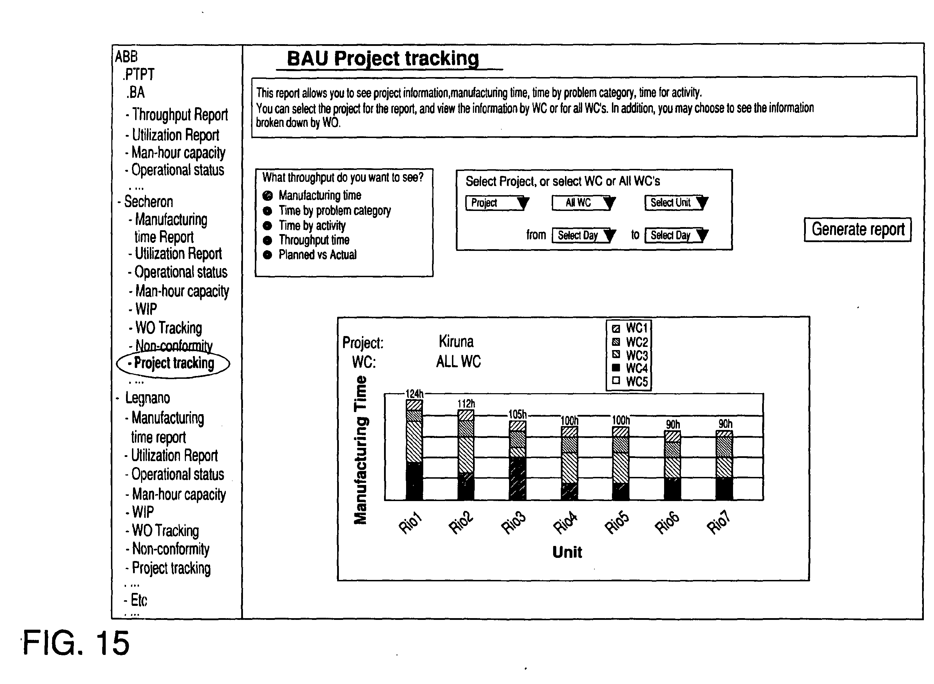

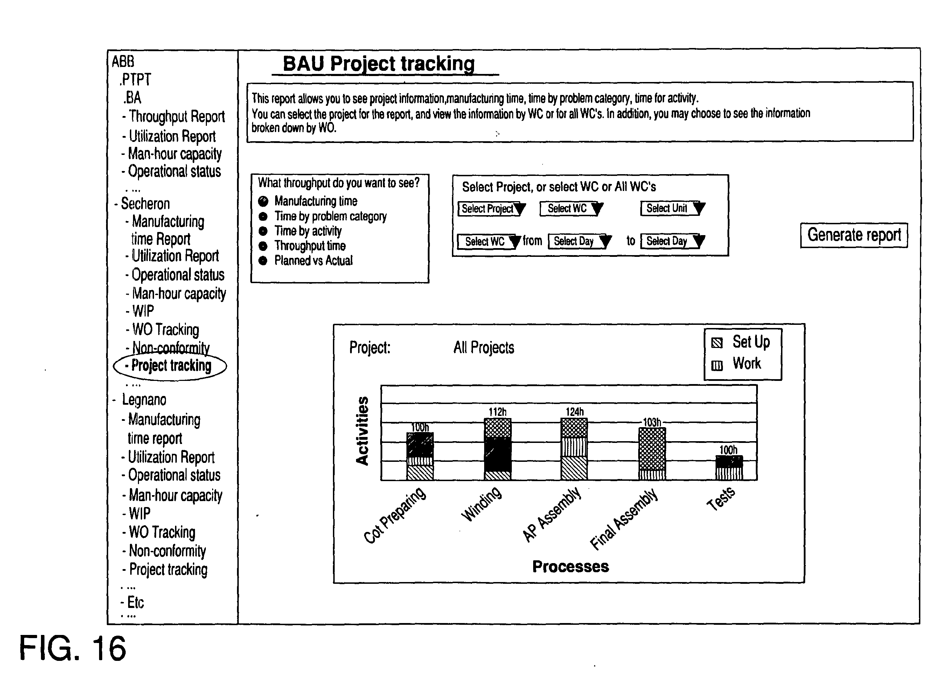

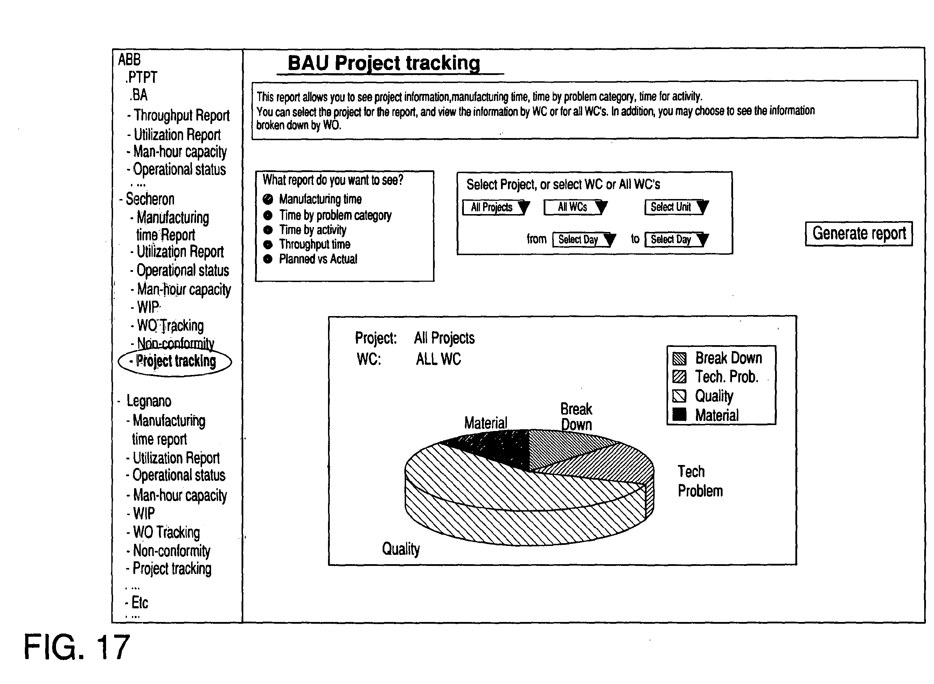

Referring now to Figs. 10-17, there are illustrated several exemplary graphical user interfaces that are provided to the user to query various KPIs and output results with respect to various machines, WOs, and facilities. In the interfaces, the user may select from the following criteria to obtain KPI information: employees, periods of time, dates, work centers, work stations, etc. to obtain enterprise performance information. The user interfaces are not limited to those illustrated in Figs. 10-17 as other information related to the shop floor may be provided to the user.

While the present invention has been described in connection with the preferred embodiments of the various Figs., it is to be understood that other similar embodiments may be used or modifications and additions may be made to the described embodiment for performing the same function of the present invention without deviating therefrom. For example, one skilled in the art will recognize that the present invention as described in the present application may apply to any computing device or environment, whether wired or wireless, and may be applied to any number of such computing devices connected via a communications network, and interacting across the network. Furthermore, it should be emphasized that a variety of computer platforms, including handheld device operating systems and other application specific operating systems are contemplated, especially as the number of wireless networked devices continues to proliferate. Still further, the present invention may be implemented in or across a plurality of processing chips or devices, and storage may similarly be effected across a plurality of devices. Therefore, the present invention should not be limited to any single embodiment, but rather should be construed in breadth and scope in accordance with the appended claims.

**Claims**

1. A unified framework for visually displaying real-time enterprise status information over all levels of a corporate organizational structure of an enterprise, comprising:

   an application integration platform that receives plural types of data from manufacturing and information systems within said enterprise, said application integration platform analyzing said plural types of data to determine key performance indicators;
   a process control server that receives manufacturing data from at least one work center and forwards said manufacturing data to said application integration platform;
   a database containing information related to manufacturing processes performed at said at least one work center; and
   a graphical user interface that interfaces with said application integration platform to provide a visual display of said key performance indicators in accordance with the class of user interacting therewith,

   wherein said levels of said corporate organizational structure are modeled as objects having methods and variables, said objects being created using an organizational hierarchical structure of said enterprise to be monitored together with respective states and behaviors of components within each level of said corporate structure.

2. The system recited in claim 1, wherein said key performance indicators include at least one of: throughput time, manufacturing hours, work center utilization, man-hour capacity, planned vs. actual hours for work orders, and work in process.

3. The system recited in claim 1, wherein said key performance indicators are determined in accordance with at least one of a work order number, a work station identifier, a start time, an end time, an activity code, a problem code, employee information, a material code, a planned start time, and a planned completion time.

4. The system recited in claim 1, wherein objects modeling respective components of a first part of said corporate structure are reusable to model components of a second part of said corporate structure.

5. The system recited in claim 1, wherein the classes of users include managers, engineers, and operators.

6. The system recited in claim 1, wherein one class of users is provided financial and manufacturing key performance indicators, wherein a second class of users is provided analysis capabilities, and a third class of users is provided key performance indicators for a supervised area and scheduling information.

7. A system for visually displaying real-time enterprise status information over all levels of a corporate organizational structure of an enterprise, comprising:

   an object-oriented model of levels of said corporate organizational structure, said objects having methods and variables and being created using an organizational hierarchical structure of said enterprise such that respective states and behaviors of components within each level of said corporate structure are monitored together;
   an application integration platform that receives plural types of data from manufacturing and information systems within an enterprise via a network infrastructure and analyzes said plural types of data in response to user inputs;
   a process control server that receives manufacturing data from at least one work center and forwards said manufacturing data to said application integration platform;
   a database containing information related to manufacturing processes performed at said at least one work center; and
   a user interface that displays the analyzed plural types of data to determine key performance indicators,

   wherein said at least one work center contains manufacturing machines, and a controller that receives sensor data from said machines and communicates said sensor data to said process control server.

8. The system of claim 7, wherein objects modeling respective components of a first part of said corporate structure are reusable to model components of a second part of said corporate structure.

9. The system recited in claim 7, wherein different ones of said key performance indicators are presented to different classes of users interacting with said management system.

10. The system recited in claim 7, wherein said key performance indicators include at least one of: throughput time, manufacturing hours, work center utilization, man-hour capacity, planned vs. actual hours for work orders, and work in process.

11. The system recited in claim 10, wherein said key performance indicators are selected by said classes of users and determined in accordance with at least one of a work order number, a work station identifier, a start time, an end time, an activity code, a problem code, employee information, a material code, a planned start time, and a planned completion time.

12. The system recited in claim 11, wherein the classes of users include managers, engineers, and operators.

13. The system recited in claim 12, wherein one class of users is provided financial and manufacturing key performance indicators, wherein a second class of users is provided analysis capabilities, and a third class of users is provided key performance indicators for a supervised area and scheduling information.

14. In a system for providing information over all levels of a corporate organizational structure, a method of visually displaying real-time enterprise management information, said method comprising:

obtaining manufacturing data from at least one work center having at least one manufacturing machine, wherein said at least one work center and said manufacturing machine are modeled as objects having methods and variables, said objects using an organizational hierarchy of said at least one work center and said manufacturing machine such that respective states and behaviors are monitored together;
storing said manufacturing data in a database containing information related to manufacturing processes performed at said at least one work center;
analyzing said manufacturing data to determine key performance indicators; and
presenting differing ones of said key performance indicators to different classes of end users in accordance with user-selected input parameters.

15. The method of claim 14, wherein said key performance indicators include at least one of: throughput time, manufacturing hours, work center utilization, man-hour capacity, planned vs. actual hours for work orders, and work in process.

16. The method of claim 14, wherein said key performance indicators are determined in accordance with a selection of at least one of a work order number, a work station identifier, a start time, an end time, an activity code, a problem code, employee information, a material code, a planned start time, and a planned completion time.

17. The method of claim 14, wherein one class of users is provided financial and manufacturing key performance indicators, wherein a second class of users is provided analysis capabilities, and a third class of users is provided key performance indicators for a supervised area and scheduling information.

**Computing Environment** <u>100</u>

FIG. 1

EP 1 515 257 A1

**FIG. 2**

- AIP Thin Client — 204
- AIP Client — 206
- Quality - Lotus Notes — 208
- ERP-SAP — 220
- PDM — 212
- Aspect Intergrator Platform — 200
- OPC (OLE for Process Control) — 202
- 228
- Work Centers — 214
  - Coil Winding — 216
  - Core Stacking — 218
  - Drying Filing — 220
  - Active Part Assembly — 222
  - Tank/Final Assembly — 224
  - Test — 226

EP 1 515 257 A1

**AIP Thin Client** ⌐204

220⌐ **ERP-SAP** 206⌐ **AIP Client**

⌐208 230⌐ ⌐212
**Quality - Lotus Notes** **Broker** **PDM**
**XML**

228 ⟺ **Aspect Intergrator Platform** 200

**OPC (OLE for Process Control)** 202

Machine Control
234 Controller
233

Machine Control

Automated
Machine 234

**FIG. 3**

EP 1 515 257 A1

**Aspect Intergrator Platform**

200

228

SQL

236

L
A
N

206

**AIP Client**

**Corporate Intranet** 240

Directory Replication & Database Replication

# FIG. 4

Aspect Intergrator Platform    200

OPC Client for ODBC    202

SQL
228

Winding
Machine

Sensors for monitoring KPIs

Controller    216

OPC Server

L
A
N

236

AIP Client

206

Directory Replication & Database Replication

Corporate Intranet    240

FIG. 5

EP 1 515 257 A1

FIG. 6

Boardroom

Business Area (1) — Business Area (2) — Business Area (n)

Business Area (1): Work Center (1) — Work Station (1) — Work Station (n) — Work Center (n) — Work Station (1) — Work Station (n)

Business Area (2): Work Center (2) — Work Station (1) — Work Station (n) — Work Center (n) — Work Station (1) — Work Station (n)

Business Area (n): Work Center (n) — Work Station (1) — Work Station (n) — Work Center (n) — Work Station (1) — Work Station (n)

FIG. 7

**Work Station 244**

Circle diagram outer ring labels: Utilization, Quality, User Groups, Operation

Inner circle:
Machine Turning
Machine On
Training
Non-Conformity
Six Sigma
Work Order
Work Instructions
Privileges

Coil Winding Station (BAU1)

Final Assembly Station (BAU1)

**Work Center 246**

Circle diagram outer ring labels: Utilization, Quality, User Groups, Operation

Inner circle:
Machine Turning
Machine On
Training
Non-Conformity
Six Sigma
Work Order
Work Instructions
Privileges

Coil Winding (BAU1)

Final Assembly (BAU1)

FIG. 8A

Business Area Unit
248

Boardroom
250

FIG. 8B

Management
(Where, Why?)  → Financial KPIs
Manufacturing KPIs

Middle Management/Engineering
(What, When?)  → Analysis capabilities
Continuous Improvement

Supervisors/Operators
(How?)  → KPI for supervised area
Routing/Scheduling Info

# FIG. 9

EP 1 515 257 A1

ABB
  .PTPT
  .BA
  (- Throughput Report)
  - Utilization Report
  - Man-hour capacity
  - Operational status
  . ...

- Secheron
  - Throughput Report
  - Utilization Report
  - Operational status
  - Man-hour capacity
  - WIP
  - WO Tracking
  - Non-conformity
  - Project tracking
  . ...

- Legnano
  - Manufacturing
    time report
  - Utilization Report
  - Operational status
  - Man-hour capacity
  - WIP
  - WO Tracking
  - Non-conformity
  - Project tracking
  . ...
  - Etc
  . ...

## BA Throughput report

This report allows you to view BA throughput by BAU and by Product line.
You can either view throughput for any period of time. or you can compare throughput for 2 periods of time (ex. compare one month to another)
Avg throughput is defined as the avg time (in days) that a WO is inprocess (time elapsed from beg. of WO to end of WO. avg per BAU or per Product line, for specified period of time)

What throughput do you want to see?
⊘ For BAU  ● For Product Line

Do you want to see throughput for a time period, or comparison?
● For one time period from [ Select Day ▼ ] to [ Select Day ▼ ]
⊘ Compare from [ Select Day ▼ ] to [ Select Day ▼ ]
  and from [ Select Day ▼ ] to [ Select Day ▼ ]

[ Generate report ]

**Avg Wo throughput by BAU, in days**

etc ...
BAU 9    18 / 18
BAU 8    15 / 16.5
BAU 7    15 / 15.25
BAU 6    17 / 15.25
Cordoba  16 / 15
St. Louis 14 / 14.2
Bad Honnet 15 / 14
Ludvika  15 / 13.5
Secheron 13 / 12

0    5    10    15    20
**Days**

⬓ avg from 1 Jan 2002 to 31 Dec 2002
▨ avg from 1 Jan 2001 to 31 Dec 2001

FIG. 10          Click on any BAU to display detailed BAU Throughput report

EP 1 515 257 A1

EP 1 515 257 A1

ABB
.PTPT
 .BA
  - Throughput Report
  (- Utilization Report)
  - Man-hour capacity
  - Operational status
  . ...

 - Secheron
  - Throughput Report
  - Utilization Report
  - Operational status
  - Man-hour capacity
  - WIP
  - WO Tracking
  - Non-conformity
  - Project tracking
  . ...

 - Legnano
  - Manufacturing
    time report
  - Utilization Report
  - Operational status
  - Man-hour capacity
  - WIP
  - WO Tracking
  - Non-conformity
  - Project tracking
  . ...
  - Etc
  . ...

## BA Utilization (Coil Winding WC)

This report allows you to viewAvg % Utilization by BAU for the coil windings work center.
You can either view utilization for any period of time. or you can compare utilization for 2 periods of time (exp. compare one month to another)
Utilization is the percentage of usage time (actual usage time divided by theoretical available time, avg per BAU, for specified period of time)

Do you want to see utilization for a time period, or comparison?

● For one time period from [ Select Day ▼ ]   to [ Select Day ▼ ]

● Compare from [ Select Day ▼ ]   to [ Select Day ▼ ]
       and from [ Select Day ▼ ]   to [ Select Day ▼ ]

[ Generate report ]

### Avg % Coil Winding utiltization

etc ...
BAU 9 — 56 / 66
BAU 8 — 60 / 69
BAU 7 — 56 / 45
BAU 6 — 66 / 64
Cordoba — 67 / 76
St. Louis — 45 / 55
Bad Honnet — 56 / 52
Ludvika — 45 / 62
Secheron — 64 / 57

0  10  20  30  40  50  60  70  80
**Percentage**

☐ avg from 1 Jan 2002 to 31 Dec 2002
▨ avg from 1 Jan 2001 to 31 Dec 2001

Click on any BAU to display detailed BAU Throughput report

# FIG. 11

ABB
.PTPT
 .BA
 - Throughput Report
 - Utilization Report
 - Man-hour capacity
 - Operational status
 . ...

- Secheron
 - Throughput Report
 - Utilization Report
 - Operational status
 - Man-hour capacity
 - WIP
 - WO Tracking
 - Non-conformity
 - Project tracking
 . ...

- Legnano
 - Manufacturing
   time report
 - Utilization Report
 - Operational status
 - Man-hour capacity
 - WIP
 - WO Tracking
 - Non-conformity
 - Project tracking
 . ...

 - Etc
 . ...

## BA Man-hour capacity report

This report allows you to view BA man-hours, either as % used man-hours (actual used man-hours / available man-hours) per BAU, or as total available & actual used # of man-hours per Bau.
you can either view man-hours for any period of time, or yoy can compare throughput for 2 periods of time ( ex. compare one month to another)

What man-hour report do you want to see?
- ● % used man-hours
- ● Total available & actual used man-hours

Do you want to see man-hour for a time period, or comparison?
- ● For one time period from [Select Day ▼] to [Select Day ▼]
- ● Compare from [Select Day ▼] to [Select Day ▼]
  and from [Select Day ▼] to [Select Day ▼]

[ Generate report ]

### Total avail. man hours & actual used man hours (comparison)

Legend:
- actual used 1 Jan 2002 to 31 Dec 2002
- total avail 1 Jan 2002 to 31 Dec 2002
- actual used 1 Jan 2001 to 31 Dec 2001
- total avail 1 Jan 2001 to 31 Dec 2001

Bars for: BAU 9, BAU 7, Cordoba, Bad Honnet, Secheron
X-axis: 0, 2000, 4000, 6000, 8000, 10000 — hours

Click on any BAU to display detailed BAU Throughput report

## FIG. 12

EP 1 515 257 A1

## Secheron home page

ABB
.PTPT
.BA
- Throughput Report
- Utilization Report
- Man-hour capacity
- Operational status
. ...

(Secheron)

- Utilization Report
- Manufacturing time report
- Operational status
- Man-hour capacity
- WIP
- WO Tracking
- Non-conformity
- Project tracking
. ...

- Legnano

- Manufacturing time report
- Utilization Report
- Operational status
- Man-hour capacity
- WIP
- WO Tracking
- Non-conformity
- Project tracking
. ...
- Etc
. ...

**Summary**

Avg Throughput YTD ( Days work order starts and ends): 23 days
Avg Manufacturing hours (time associated with production): 132 hrs
Avg Utilization YTD (winding, Oil filing): 56%
How many comformity reports ytd: 23

**Work in progress**

| Nick Name | Unit |
|-----------|------|
| Rio2 | 1 |
| Rio4 | 2 |
| TOTAL WO .... | |

| Nick Name | Unit |
|-----------|------|
| Rio2 | 1 |
| Rio4 | 2 |
| TOTAL WO .... | |

| Nick Name | Unit |
|-----------|------|
| Rio2 | 1 |
| Rio4 | 2 |
| TOTAL WO .... | |

| Nick Name | Unit |
|-----------|------|
| Rio2 | 1 |
| Rio4 | 2 |
| TOTAL WO .... | |

| Nick Name | Unit |
|-----------|------|
| Rio2 | 1 |
| Rio4 | 2 |
| TOTAL WO .... | |

# of Drums → Winding → WO → Active part Assembly → WO → Final Assembly → WO → Test

# of Core → Core → WO →

# Tanks

| Nick Name | Unit |
|-----------|------|
| Rio2 | 1 |
| Rio4 | 2 |
| TOTAL WO .... | |

| Nick Name | Unit |
|-----------|------|
| Rio2 | 1 |
| Rio4 | 2 |
| TOTAL WO .... | |

| Nick Name | Unit |
|-----------|------|
| Rio2 | 1 |
| Rio4 | 2 |
| TOTAL WO .... | |

| Nick Name | Unit |
|-----------|------|
| Rio2 | 1 |
| Rio4 | 2 |
| TOTAL WO .... | |

## FIG. 13

# FIG. 14

ABB
 .PTPT
  .BA
   - Throughput Report
   - Utilization Report
   - Man-hour capacity
   - Operational status
   . ....
 - Secheron
   - Manufacturing
     time Report
   - Utilization Report
   - Operational status
   - Man-hour capacity
   - WIP
   - WO Tracking
   - Non-conformity
   . ...
 - Legnano
   - Manufacturing
     time report
   - Utilization Report
   - Operational status
   - Man-hour capacity
   - WIP
   - WO Tracking
   - Non-conformity
   - Project tracking
   . ...
   - Etc
   . ...

## BAU Operational Status Report

This report displays the current operational status of the all work stations within that BAU.

Do you want to see utilization for a time period, or comparison?
- For one time period from [Select Day ▼] to [Select Day ▼]
- Current day

| | | machine off |
| --- | --- | --- |
| | ⊘ | machine on but not turning |
| | ⊘ | machine on and turning |

| Winding Work Center | | 0% 20% 40% 60% 80% 100% | Total "On" Status |
| --- | --- | --- | --- |
| Winding Machine 1 | ⊘ | 55%  45% | 2300h |
| Winding Machine 2 | ⊘ | 45%  45% | 1300h |
| Winding Machine 3 | ⊘ | 56%  45% | 600h |
| Winding Machine 4 | ⊘ | 55%  45% | 3300h |
| Winding Machine 5 | ⊘ | 22%  78% | 245h |
| Winding Machine 6 | ⊘ | 65%  45% | 2320h |

| Final Assembly WC | | | | | |
| --- | --- | --- | --- | --- | --- |
| Oven 1 | ⊘ | Temperature | 25 | 55%  45% | 3300h |
| | | Vacuum Level | 50 | | |
| Oil Fill 1 | ⊘ | | | 42%  58% | 245h |
| Oven 2 | ⊘ | Temperature | 30 | 55%  45% | 2320h |
| | | Vacuum Level | 55 | | |
| Oil Fill 2 | ⊘ | | | 63%  17% | 210h |

EP 1 515 257 A1

**ABB**
.PTPT
.BA
  - Throughput Report
  - Utilization Report
  - Man-hour capacity
  - Operational status
  . ...
- Secheron
  - Manufacturing
    time Report
  - Utilization Report
  - Operational status
  - Man-hour capacity
  - WIP
  - WO Tracking
  - Non-conformity
  - **Project tracking**
  . ...
- Legnano
  - Manufacturing
    time report
  - Utilization Report
  - Operational status
  - Man-hour capacity
  - WIP
  - WO Tracking
  - Non-conformity
  - Project tracking
  . ...
- Etc
  . ...

## BAU Project tracking

This report allows you to see project information,manufacturing time, time by problem category, time for activity.
You can select the project for the report, and view the information by WC or for all WC's. In addition, you may choose to see the information broken down by WO.

What throughput do you want to see?
◉ Manufacturing time
● Time by problem category
● Time by activity
● Throughput time
● Planned vs Actual

Select Project, or select WC or All WC's

| Project ▼ | All WC ▼ | Select Unit ▼ |

from | Select Day ▼ | to | Select Day ▼ |

| Generate report |

Project:        Kiruna

WC:             ALL WC

☒ WC1
▨ WC2
◧ WC3
■ WC4
□ WC5

Manufacturing Time

124h   112h   105h   100h   100h   90h   90h

Rio1   Rio2   Rio3   Rio4   Rio5   Rio6   Rio7

**Unit**

# FIG. 15

ABB
 .PTPT
  .BA
   - Throughput Report
   - Utilization Report
   - Man-hour capacity
   - Operational status
   . ....
 - Secheron
   - Manufacturing
     time Report
   - Utilization Report
   - Operational status
   - Man-hour capacity
   - WIP
   - WO Tracking
   - Non-conformity
   - **Project tracking**
   . ...
 - Legnano
   - Manufacturing
     time report
   - Utilization Report
   - Operational status
   - Man-hour capacity
   - WIP
   - WO Tracking
   - Non-conformity
   - Project tracking
   . ...
 - Etc
   . ...

## BAU Project tracking

This report allows you to see project information,manufacturing time, time by problem category, time for activity.
You can select the project for the report, and view the information by WC or for all WC's. In addition, you may choose to see the information broken down by WO.

**What throughput do you want to see?**
- Manufacturing time
- Time by problem category
- Time by activity
- Throughput time
- Planned vs Actual

**Select Project, or select WC or All WC's**

[ Select Project ▼ ]  [ Select WC ▼ ]  [ Select Unit ▼ ]

[ Select WC ▼ ] from [ Select Day ▼ ] to [ Select Day ▼ ]

[ Generate report ]

Project:          All Projects          ▨ Set Up
                                         ⊞ Work

Activities
100h | 112h | 124h | 103h | 100h

Cot Preparing | Winding | AP Assembly | Final Assembly | Tests

**Processes**

# FIG. 16

ABB
 .PTPT
  .BA
  - Throughput Report
  - Utilization Report
  - Man-hour capacity
  - Operational status
  . ...
 - Secheron
  - Manufacturing
   time Report
  - Utilization Report
  - Operational status
  - Man-hour capacity
  - WIP
  - WO Tracking
  - Non-conformity
  - Project tracking

 - Legnano
  - Manufacturing
   time report
  - Utilization Report
  - Operational status
  - Man-hour capacity
  - WIP
  - WO Tracking
  - Non-conformity
  - Project tracking
  . ...
 - Etc
  . ...

## BAU Project tracking

This report allows you to see project information, manufacturing time, time by problem category, time for activity.
You can select the project for the report, and view the information by WC or for all WC's. In addition, you may choose to see the information broken down by WO.

**What report do you want to see?**
- ◉ Manufacturing time
- ● Time by problem category
- ● Time by activity
- ● Throughput time
- ● Planned vs Actual

**Select Project, or select WC or All WC's**

[ All Projects ▼ ]  [ All WCs ▼ ]  [ Select Unit ▼ ]

from [ Select Day ▼ ]  to [ Select Day ▼ ]

[ Generate report ]

Project:  All Projects
WC:       ALL WC

Legend:
- ▨ Break Down
- ▨ Tech. Prob.
- ▨ Quality
- ■ Material

Material   Break Down

Tech Problem

Quality

# FIG. 17

**European Patent Office** | **EUROPEAN SEARCH REPORT** | Application Number
EP 04 25 5410

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 02/061626 A (MANUGISTICS INC) 8 August 2002 (2002-08-08) * abstract * * page 3, line 3 - line 27 * * page 4, line 6 - line 10 * * page 6, line 26 - page 7, line 30 * * page 9, line 22 - page 10, line 27 * * page 19, line 11 - line 14 * * page 20, line 8 - page 21, line 12 * | 1-17 | G06F17/60 |
| X | US 2002/038217 A1 (YOUNG ALAN) 28 March 2002 (2002-03-28) * abstract * * page 1, paragraphs 2,5,6,14-16 * * page 2, paragraphs 17-19,23-28,31 * | 1-17 | |
| A | COPPUS G ET AL: "Manufacturing information systems for the process industry - Responding to the plant management challenges of the 90's" ISA TRANSACTIONS, INSTRUMENT SOCIETY OF AMERICA. PITTSBURGH, US, vol. 34, no. 2, June 1995 (1995-06), pages 119-132, XP004020103 ISSN: 0019-0578 * abstract * * page 121, paragraph 1.4 * * page 124, paragraph 2.2 * * page 129, paragraphs 2.5,3.1 * * page 122; figure 3 * | 1-17 | TECHNICAL FIELDS SEARCHED (Int.Cl.7) G06F |

-/--

The present search report has been drawn up for all claims

| Place of search | Date of completion of the search | Examiner |
|---|---|---|
| The Hague | 23 November 2004 | De Smet, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&  : member of the same patent family, corresponding document

EPO FORM 1503 03.82 (P04C01)

**European Patent Office**

**EUROPEAN SEARCH REPORT**

Application Number

EP 04 25 5410

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | CHENG-JYE LUH: "An object-oriented approach towards computer-integrated manufacturing systems analysis" SYSTEMS, MAN, AND CYBERNETICS, 1994. HUMANS, INFORMATION AND TECHNOLOGY., 1994 IEEE INTERNATIONAL CONFERENCE ON SAN ANTONIO, TX, USA 2-5 OCT. 1994, NEW YORK, NY, USA,IEEE, 2 October 1994 (1994-10-02), pages 1855-1859, XP010139094 ISBN: 0-7803-2129-4 abstract; paragraph 2 "Object-Oriented Modeling" | 1,4,7,8, 14 | |
| A | HAIBIN LUO ET AL: "CIMflow: a workflow management system based on integration platform environment" EMERGING TECHNOLOGIES AND FACTORY AUTOMATION, 1999. PROCEEDINGS. ETFA '99. 1999 7TH IEEE INTERNATIONAL CONFERENCE ON BARCELONA, SPAIN 18-21 OCT. 1999, PISCATAWAY, NJ, USA,IEEE, US, 18 October 1999 (1999-10-18), pages 233-241, XP010365781 ISBN: 0-7803-5670-5 * abstract * paragraph 2 "The Architecture of CIMFlow" paragraph 2.1 "Workflow modeling tool" paragraph 2.2 "Administration tool" | 1,7,14 | TECHNICAL FIELDS SEARCHED (Int.Cl.7) |

The present search report has been drawn up for all claims

| Place of search | Date of completion of the search | Examiner |
|---|---|---|
| The Hague | 23 November 2004 | De Smet, M |

EPO FORM 1503 03.82 (P04C01)

## ANNEX TO THE EUROPEAN SEARCH REPORT
## ON EUROPEAN PATENT APPLICATION NO.

EP 04 25 5410

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-2004

| Patent document cited in search report | | Publication date | Patent family member(s) | | Publication date |
|---|---|---|---|---|---|
| WO 02061626 | A | 08-08-2002 | TW<br>WO<br>US | 552528 B<br>02061626 A1<br>2002116213 A1 | 11-09-2003<br>08-08-2002<br>22-08-2002 |
| US 2002038217 | A1 | 28-03-2002 | NONE | | |

For more details about this annex : see Official Journal of the European Patent Office, No. 12/82